# EUROPÄISCHE PATENTSCHRIFT

(11) **EP 3 362 278 B1**
(45) Veröffentlichungstag und Bekanntmachung des Hinweises auf die Patenterteilung: **11.09.2019**
(21) Anmeldenummer: 16735633.6
(22) Anmeldetag: 04.07.2016
(51) Int. Cl.: B32B 7/02, B32B 5/20, B32B 9/02, B32B 9/04, B32B 25/04, B32B 25/08, B32B 25/14, B32B 25/16, B32B 27/06, B32B 27/08, B32B 27/32, C08J 9/00, C08J 9/08

(54) **FOLIENLAMINAT UND INNENVERKLEIDUNGSTEIL FÜR KRAFTFAHRZEUGE**
FILM LAMINATE AND INTERIOR TRIM PART FOR MOTOR VEHICLES
STRATIFIÉ DE FEUILLES ET PARTIE D'HABILLAGE INTÉRIEUR POUR VÉHICULES AUTOMOBILES

(30) Priorität: 15.10.2015 DE 102015220034
(43) Veröffentlichungstag der Anmeldung: 22.08.2018
(73) Patentinhaber: Benecke-Kaliko AG, 30419 Hannover (DE)
(72) Erfinder: MANI, Joseph, 73054 Eislingen (DE); HÜLSEWEDE, Volker, 73326 Deggingen (DE)
(74) Vertreter: Finger, Karsten
(86) Internationale Anmeldenummer: PCT/EP2016/065632
(87) Internationale Veröffentlichungsnummer: WO 2017/063767

(56) Entgegenhaltungen:
- GB-A- 2 241 665

## Beschreibung

Die Erfindung betrifft ein Folienlaminat, umfassend zumindest eine kompakte Dekorschicht mit einer Lackschicht auf der Oberseite und einer Schaumschicht auf der Unterseite, wobei die Schaumschicht eine Dichte von mehr als 500 kg/m³ aufweist. Ferner betrifft die Erfindung die Verwendung eines solchen Folienlaminates für die Beschichtung von Bauteilen für die Innenverkleidung von Kraftfahrzeugen und Innenverkleidungsteile von Kraftfahrzeugen, die mit einem solchen Folienlaminat versehen sind.

Im Bereich der polyolefin-basierten dekorativen Flächenmaterialien werden im Moment im Wesentlichen zwei Konstruktionen verwendet.

Für Anwendungen und Bauteile, in denen das Flächenmaterial in nachgeschalteten thermischen Umformprozessen einer starken Verstreckung (z. B. bis zu 300 %) unterworfen ist, werden bevorzugt kompakte Folienkonstruktionen, die aus mehreren Schichten aufgebaut sein können, verwendet. Derartige kompakte Folien auf der Basis von Polyolefinen sind z. B. in der DE 10018196 A1 beschrieben. Bei der Herstellung eines Innenverkleidungsteils eines Kraftfahrzeuges, beispielsweise einer Instrumententafel, wird die Folienkonstruktion zuerst im Positiv- oder Negativ-Tiefziehverfahren thermoformiert. Anschließend wird in einem zweiten Verarbeitungsschritt die so hergestellte "Haut" mit einem in der Regel PUR-basierten Schaum hinterschäumt und dieser Schaum mit einem stabilen Trägerteil verbunden.

Für Anwendungen und Bauteile, in denen das Flächenmaterial in nachgeschalteten thermischen Umformprozessen einer geringen Verstreckung (z. B. < 200 %) unterworfen wird, können Flächenmaterialien mit mindestens einer geschäumten Schicht, so genannte Schaumfolienlaminate, eingesetzt werden. Diese bestehen aus einer ein- oder mehrlagigen kompakten Dekorfolie (Lackschicht und Dekorschicht), welche mit einem auf der Basis von Polyolefinen hergestellten geschäumten Material als untere Schicht verbunden ist. Bei der Herstellung eines Innenverkleidungsteils eines Kraftfahrzeuges, beispielsweise einer Instrumententafel, wird in diesem Fall das Schaumfolienlaminat zuerst im Positiv- oder Negativ-Tiefziehverfahren thermoformiert. Anschließend wird die so hergestellte "Haut" mit einem Kleber mit dem stabilen Trägerteil verbunden. Der Vorteil dieser zweitgenannten Schaumlaminate ist darin zu sehen, dass sie in einem einstufigen Prozess zu einem geformten, geschäumten Bauteil mit der durch den Schaum hervorgerufenen, gewünschten Weichheit (gewünschte Haptik) verarbeitet werden kann. Bei Verwendung der erstgenannten kompakten Folienkonstruktion ist dies nur mit einem dem Thermoformieren angeschlossenen Hinterschäumvorgang zu erzielen.

Die polyolefin-basierten dekorativen Flächenmaterialien werden verwendet, um in Thermoformierverfahren Bauteile für den automobilen Innenraum, u. a. Instrumententafeln, zu produzieren. Werden Folienlaminate in Bauteilen verwendet, die eine Airbagfunktion enthalten, müssen die Folienlaminate ein erforderliches Reißverhalten zeigen, wobei innerhalb von definierten Zeitvorgaben die Entfaltung des Airbags stattfinden muss, ein Partikelflug vermieden wird und der Schutz des Fahrgastes gewährleistet ist. Um dies zu gewährleisten, sieht der aktuelle Stand der Technik hierfür die rückseitige Schwächung (Sollbruchstelle) des Schaumfolienlaminates in der Regel mit Hilfe eines Laserschnittes vor. Diese eingebrachten Sollbruchstellen sind entweder direkt nach der Einbringung sichtbar oder werden im späteren Gebrauch des Bauteiles sichtbar. Diese Sichtbarkeit wurde als ausgeprägter optischer Mangel empfunden. Ferner fallen für die Beschaffung und das Betreiben der Maschinen für die Einbringung der Schwächungslinien zusätzliche Kosten an, weshalb Schaumfolienlaminate bisher nur in geringem Umfang für Bauteile mit Airbagfunktion eingesetzt werden.

Für die Herstellung der vorgenannten polyolefin-basierten dekorativen Flächenmaterialien wird in der Regel eine Mischung aus linearen Polymeren, wie Polyethylen und Polypropylen, eingesetzt. Flächenmaterialien hieraus werden mit Schwächungslinien versehen. Es ist bei diesen Materialien auch darauf zu achten, dass kein so genanntes "Ballooning" mit der Gefahr des Partikelfluges auftritt. Auch dies kann mit vorgegebenen Schwächungslinien vermieden werden.

Der Erfindung liegt nun die Aufgabe zu Grunde, ein Folienlaminat bereitzustellen, welches als Innenverkleidungsteil von Kraftfahrzeugen, insbesondere im Bereich von Airbagabdeckungen, eingesetzt werden kann und ohne Schwächungslinien auskommt. Gleichzeitig soll das Folienlaminat im Tiefziehverfahren verarbeitet werden können, d. h,. dass das Folienlaminat eine ausreichende Stabilität für thermische Umformprozesse mit einem Verstreckungsgrad bis zu 300 % aufweisen soll.

Gelöst wird die Aufgabe durch ein Folienlaminat der eingangs genannten Art, wobei die Schaumschicht auf einer Polymerzusammensetzung basiert, die
a) 15 bis 60 Gewichtsteile zumindest eines thermoplastischen Vulkanisates (TPV)
b) 15 bis 35 Gewichtsteile zumindest eines High Melt Strength Polyolefins (HMS Polyolefins) und
c) 30 bis 60 Gewichtsteile zumindest eines Low Density Polyethylens (LDPE) enthält, wobei sich die Anteile von a), b) und c) zu 100 addieren.

Thermoplastische Vulkanisate (TPV) sind hierbei vernetzte thermoplastische Elastomere.

Im Rahmen dieser Erfindung sind High Melt Strength Polyolefine (HMS Polyolefine) Polyolefine mit hoher Schmelzfestigkeit (**H**igh **M**elt **S**trength Polyolefin). HMS-Polyethylen und HMS-Polypropylen weisen eine Dehnviskosität von 10⁴ bis 10⁷ Pa·s bei 190 °C, eine Hencky Strain Rate von 0,1 s⁻¹ und eine Hencky Strain von 3,0 auf. Derartige HMS-Polyolefine sind auf dem Markt von unterschiedlichen Herstellern erhältlich. Sie sind hochverzweigt und besitzen die Eigenschaft, bei niedrigen Scherraten viskoser zu sein als Polymere gleichen Molekulargewichtes aber mit geringerem Verzweigungsgrad, um bei hohen Scherraten einen stärkeren Abfall der Viskosität zu zeigen.

Unter Low Density Polyethylen (LDPE) werden Polyethylene mit einer Dichte gemäß ASTM D 1505 von 0,915 bis 0,935 g/cm³ sowie einem Gewichtsmittel der Molekulargewichtsverteilung M_{w} gemäß GPC von 20000 bis 500000 g/mol verstanden.

Unter kompakten Schichten oder Folien werden im Rahmen dieser Erfindung Schichten bzw. Folien mit einer Dichte von größer 800 kg/m³ verstanden. Kompakte Schichten sind insbesondere nicht geschäumte Schichten. Schaumschichten weisen in der Regel Dichten von kleiner 800 kg/m³ auf. Die Dichte der Schaumschicht beträgt jedoch gemäß der Erfindung mehr als 500 kg/m³, vorzugsweise 500 bis 700 kg/m³.

Überraschenderweise kann mit einem Folienlaminat mit einer derartigen Schaumfolie im Tiefziehprozess ein Bauteil für die Innenverkleidung von Kraftfahrzeugen hergestellt werden, das ein Reißverhalten aufweist, das den Anforderungen bei einer Airbag-Öffnung genügt, ohne dass eine nachträgliche Schwächung des Folienlaminats bzw. Bauteils erfolgen muss. Hierdurch wird zum einen eine Sichtbarkeit der Schwächungslinie vermieden, welches als Makel im Design bewertet wird. Zum anderen werden beim Bauteilhersteller Kosten in Bezug auf die Beschaffung und das Betreiben von Maschinen zur Einbringung von Schwächungslinien vermieden.

Durch die erfindungsgemäße Zusammensetzung der Schaumschicht kann eine signifikante Reduktion der Zugdehnung der Folienlaminate bei den Airbag-Prüftemperaturen von -30 °C, 20 °C und 85 °C erreicht werden, wobei gleichzeitig die Tiefziehfähigkeit bis zu einem Verstreckungsgrad von bis zu 300 % beibehalten wird. Dies könnte darin begründet liegen, dass in der Schaumschicht eine gewisse Phasenunverträglichkeit vorliegt, die das Dehnverhalten sowohl in Längs- als auch in Querrichtung bei Airbag-Prüftemperaturen beeinflusst. Die Kautschukanteile in dem thermoplastischen Vulkanisat dienen als kugelförmige "Phasenstörer", die das Fließverhalten der anderen Polymerrohstoffe untereinander minimieren. Die hoch verzweigten High Melt Strength Polyolefine und die Low Density Polyethylene liegen bei Airbag-Prüftemperaturen ungeschmolzen vor und ermöglichen gleichzeitig durch die hoch verzweigte Struktur eine Verhakung der Polymerketten ineinander. Überraschenderweise wird ein Dehn- und Reißverhalten bei Airbag-Prüftemperaturen erzielt, das geringere Unterschiede in Längs- und Querrichtung aufweist. Dies ist für ein konturgetreues Reißen der Airbag-Klappe wichtig. Ein "Ballooning" wird verhindert. Das Tiefziehen findet hingegen bei Temperaturen ab 170 bis 200 °C statt. Bei diesen Temperaturen werden die kristallinen Phasen der High Melt Strength Polyolefine und der Low Density Polyethylene aufgeschmolzen und ermöglichen damit die benötigte Dehnung für das Tiefziehen bei hohem Verstreckungsgrad.

Die Polymerzusammensetzung für die Schaumschicht kann weitere übliche Bestandteile, wie Treibmittel, Gleitmittel, Stabilisatoren, Füllstoffe, wie anorganische Füllstoffe, und/oder Pigmente enthalten.

Ein besonders gutes Dehnverhalten, insbesondere bei hohen Temperaturen, welches nahezu isotrop ist, lässt sich erzielen, wenn die Schaumschicht auf einer Polymerzusammensetzung basiert, die
a) 35 bis 45 Gewichtsteile zumindest eines thermoplastischen Vulkanisates (TPV)
b) 15 bis 25 Gewichtsteile zumindest eines High Melt Strength Polyolefin und
c) 35 bis 45 Gewichtsteile zumindest eines Low Density Polyethylens (LDPE) enthält,
wobei sich die Anteile von a), b) und c) zu 100 addieren. Zusätzlich weisen diese Zusammensetzungen den Vorteil einer hohen Kälteflexibilität auf.

Die Polymerzusammensetzung für die Schaumschicht enthält zumindest ein High Melt Strength Polyolefin. Es können auch mehrere High Melt Strength Polyolefine im Verschnitt eingesetzt werden. Gemäß einer vorteilhaften Weiterbildung der Erfindung ist das High Melt Strength Polyolefin ein High Melt Strength Polypropylen. Hier zeigen sich Vorteile hinsichtlich des Verarbeitungsverhaltens.

Die Polymerzusammensetzung für die Schaumschicht enthält zumindest ein thermoplastisches Vulkanisat. Es können auch mehrere thermoplastische Vulkanisate als Verschnitt eingesetzt werden. Für einen besonders positiven Einfluss auf das Dehn- und Reißverhalten mit Eignung für eine Airbag-Abdeckung handelt es sich bei dem thermoplastischen Vulkanisat um eines auf der Basis von Polypropylen und Ehtylen-Propylen-Dien-Elastomer (EPDM).

Die Schaumschicht des Folienlaminates kann sowohl chemisch durch Zusatz eines festen, chemischen Treibmittels in der Polymerzusammensetzung, als auch physikalisch geschäumt werden.

Für einen geringen Materialverbrauch bei der Herstellung und gutes Dehnverhalten zeichnet sich das Folienlaminat dadurch aus, dass die Lackschicht eine Dicke von weniger als 10 µm, die kompakte Dekorschicht eine Dicke von 0,2 bis 0,7 mm und die Schaumschicht eine Dicke von 0,5 bis 2,0 mm aufweist. Die Dicke der Dekorschicht sorgt dabei für ein gutes Narbbild und eine hohe Kratzbeständigkeit.

Die kompakte Dekorschicht kann eine Kunststoffschicht oder eine Schicht aus Leder sein, wobei es sich bevorzugt um eine Kunststoffschicht handelt. Für die kompakte Dekorschicht kann z. B. ein übliches auf Leder oder Kunststoff basiertes Flächenmaterial verwendet werden. In dem Leder oder Kunststoff der kompakten Dekorschicht können übliche Additive, wie z. B. Gleitmittel, Stabilisatoren, Füllstoffe, wie anorganische Füllstoffe, und/oder Pigmente, enthalten sein.

Sofern die kompakte Dekorschicht eine Kunststoffschicht ist, kann der Kunststoff z. B. Polyolefin, insbesondere thermoplastisches Polyolefin (TPO), Polyurethan (PU), z. B. thermoplastische Polyurethane (TPU), Polyvinylchlorid (PVC) oder einer Kombination von zwei oder mehr davon sein, wobei TPO besonders bevorzugt ist. Der Einsatz von thermoplastischen Polyolefinen (TPO) ist weit verbreitet.

Beispiele für Polyolefine sind Polyethylen (PE), Polypropylen (PP) und Mischungen von Polyethylen (PE) und Polypropylen (PP).

Unter Polyethylen (PE) werden hier solche Polymere oder Copolymere verstanden, deren Gewichtsanteil an Ethylen mehr als 50 Gew.-% beträgt. Unter Polypropylen (PP) werden hier solche Polymere oder Copolymere verstanden, deren Gewichtsanteil an Propylen mehr als 50 Gew.-% beträgt.

Das erfindungsgemäße Folienlaminat weist auf der glatten oder dreidimensional strukturierten Oberfläche der Dekorschicht eine Lackschicht auf. Die Lackschicht kann für die Verbesserung der Oberflächeneigenschaften, wie z. B. hinsichtlich der Optik oder der Kratzbeständigkeit, vorteilhaft sein. Die Lackschicht kann durch herkömmliche Maßnahmen auf die Oberfläche aufgebracht werden. Die Lackschicht ist vorzugsweise eine Polyurethan-Lackschicht.

Neben den genannten Schichten, kann das Folienlaminat weitere Schichten, vorzugsweise auf der Unterseite, aufweisen. So kann beispielsweise auf der Unterseite der Schaumschicht eine weitere Schaumschicht angeordnet sein.

Ferner kann die Unterseite der Schaumschicht mit einer Haftschicht oder einem Primer versehen sein. Die Haftschicht oder der Primer können als Verklebungsschicht oder Haftvermittler dienen, um eine Verbindung des Schaumfolienlaminats mit dem Bauteil oder einem Träger, an das bzw. den das Laminat angebracht werden soll, zu verbessern bzw. zu ermöglichen.

Die Herstellung des Folienlaminates erfolgt nach üblichen Verfahren, wobei die kompakte Dekorschicht in der Regel extrudiert wird und mit einer Lackschicht versehen wird. Die geschäumte Schicht wird vorzugsweise durch Schaumextrusion gebildet, wobei physikalisch (H₂O oder inerte Gase) oder unter Einsatz von chemischen Treibmitteln geschäumt werden kann. Die Schichten werden anschließend z. B. thermisch oder durch Verkleben zu einem flächigen Material verbunden, so dass ein Folienlaminat mit einer kompakten Dekorschicht und einer Schaumschicht entsteht. Es ist auch möglich, die Lackschicht nach dem verbinden der beiden anderen Schichten aufzubringen.

Diese flächigen Laminate werden zu Bauteilen weiter verarbeitet.

Im Stand der Technik sind zur Formung von Bauteilen mit dreidimensional strukturierter Oberfläche verschiedene Verfahren bekannt. Ein Beispiel dafür ist das "In-Mould-Graining-Verfahren (IMG-Verfahren)", welches sich als Spezialverfahren aus dem Negativ-Tiefziehverfahren entwickelt hat. Dieses In-Mould-Graining-Verfahren, bisher im Wesentlichen mit seinem englischsprachigen Begriff bekannt, lässt sich wohl am besten mit dem Begriff "narbgebendes Negativtiefziehen" übersetzen. Im Gegensatz zum Standardtiefziehverfahren, bei dem das Einformen in die dreidimensionale, bauteil-geometrische Struktur durch das Einfahren eines die spätere Bauteilkontur bildenden Tiefziehstempels in die Folie erfolgt, wird beim Negativtiefziehen eine Folie in eine Negativform hineingezogen, beispielsweise durch Vakuum. Das narbgebende Negativtiefziehen ist dabei eine besondere Ausgestaltung des Negativtiefziehens, in dem nicht nur die bauteil-geometrische Struktur, sondern auch die spätere Narbstruktur als Negativ in die Werkzeugoberfläche eingebracht wird.

Das erfindungsgemäße Folienlaminat ist besonders geeignet für und ausgerichtet auf die Herstellung von Bauteilen mit dem IMG Verfahren oder dem Positiv-Tiefziehverfahren.

Die hergestellten Laminate für das Positiv-Tiefziehverfahren können einem Vernetzungsschritt bevorzugt nach Einbringung der dreidimensionalen Oberflächenstruktur unterzogen werden, insbesondere der Elektronenstrahlvernetzung.

Die Vernetzung des Laminats kann mit energiereicher Strahlung, bevorzugt Elektronenstrahlung, erfolgen. Dies führt zu einer sehr guten Narbstabilität beim Positiv-Tiefziehen und zu sehr guten Tiefzieheigenschaften. Die Bestrahlung führt zu einer Vernetzung im Kunststoff.

Das Folienlaminat kann entsprechend einem Bauteil geformt sein, wobei die Bauteilform vorzugsweise erhältlich ist durch Aufbringen des Folienlaminats mit einem formgebenden Verfahrensschritt auf einen Träger, der der Bauteilform entspricht. Für das Aufbringen des Laminats auf einen Träger, z. B. einen Armaturenbrett-Träger, kennt man neben dem Tiefziehen, wie z. B. den vorstehend genannten Verfahren, eine Reihe weiterer Umformverfahren, wie etwa Drück- oder Pressverfahren, bei denen die Folie gegen Formen bzw. gegen die genannten Träger gepresst wird und ihre Bauteilform erhält. Das Flächengebilde kann z. B. durch Thermoformen, In-Mould Graining oder Low-pressuremoulding in die gewünschte Form gebracht werden.

Vorzugsweise wird das Folienlaminat für die Beschichtung von Bauteilen für die Innenverkleidung von Kraftfahrzeugen, insbesondere mindestens im Bereich der Airbag-Abdeckungen oder im Bereich der Aufreißnähte der Airbag-Abdeckungen verwendet.

Die Erfindung betrifft dementsprechend auch die Verwendung des erfindungsgemäßen Folienlaminats für die Beschichtung von Bauteilen, bevorzugt von Bauteilen für die Innenverkleidung von Kraftfahrzeugen, z. B. einem Armaturenbrett, insbesondere für die Beschichtung im Bereich der Airbag-Abdeckungen bzw. im Bereich der Aufreißnähte der Airbag- Abdeckungen.

Die Erfindung betrifft ferner ein Innenverkleidungsteil für ein Kraftfahrzeug, vorzugsweise Armaturenbrett, auf das ein erfindungsgemäßes Folienlaminat aufgebracht ist. Besonders bevorzugt ist das Folienlaminat mindestens im Bereich der Airbag-Abdeckungen bzw. im Bereich der Aufreißnähte der Airbag-Abdeckungen aufgebracht.

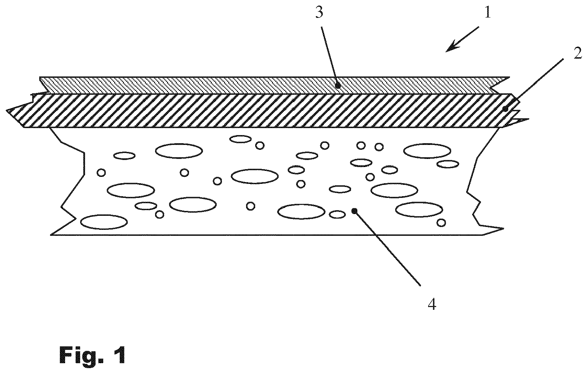

Die Erfindung wird nun anhand eines Ausführungsbeispiels näher erläutert, dabei zeigt die einzige Figur 1 schematisch das erfindungsgemäße Folienlaminat 1 mit einer kompakten Deckschicht 2. Sie weist eine Dicke von 0,5 mm auf. Auf der Deckschicht 2 befindet sich eine Lackschicht 3 mit einer Dicke von 7µm. Unter der Deckschicht 2 befindet sich die Schaumschicht 4 mit der speziellen Polymerzusammensetzung. Sie ist 1,0 mm dick. Die Folie kann zur Verkleidung eines Kfz-Armaturenbrettes im Bereich des Beifahrer-Airbags dienen. Das Folienlaminat 1 ist mit einer geprägten dreidimensional strukturierten Oberfläche auf der Dekorschicht 2 versehen, also mit einer durch Walzprägung außen aufgeprägten Narbe.

Ein derartiges Folienlaminat kann für den Bereich von Airbag-Abdeckungen bei Innenverkleidungen von Kraftfahrzeugen verwendet werden, ohne dass Schwächungslinien vorgesehen werden müssen. Es kann in Tiefziehverfahren mit hoher Verstreckung verarbeitet werden.

In der folgenden Tabelle 1 sind Beispiele für die Polymerzusammensetzungen für eine Schaumschicht 4 mit deren Eigenschaften aufgeführt (nur die Schaumschicht, nicht das Laminat), wobei die erfindungsgemäßen Zusammensetzungen mit E und die Vergleichsmischungen mit V gekennzeichnet sind.

Die Ermittlung der Zugfestigkeit und der Bruchdehnung erfolgte gemäß DIN 527-3 in Längs- (längs) und Querrichtung (quer) bei für das Airbag-Verhalten relevanten Temperaturen. Längs- und Querrichtung stehen dabei senkrecht aufeinander, wobei als Längsrichtung die Produktionsrichtung (Walzrichtung, Extrusionsrichtung) der Folie und als Querrichtung die Richtung senkrecht zur Produktionsrichtung definiert ist. Die Bruchdehnung wird auch als Reißdehnung bezeichnet. Die Prüfgeschwindigkeit betrug ca. 0,2 m/s.
Die Kugelfallprüfung erfolgte nach VDA 237-101 aus einer Höhe von 230 mm bei -35 °C.

Bei in den Inhaltsstoffen handelte es sich um die Folgenden:
- TPV: PP/EPDM Blend mit 70 Gew.-% EPDM, MFI 3,0 g/10 min (230 °C/2,16 kg), Erweichungspunkt ca. 165 °C
- HMS PP: structurally isomeric modified Propylene homopolymer, MFI= 10,0 g/10 min bei 230 °C; 2,16 kg, Schmelzefestigkeit 7 cN bei einer Dehngeschwindigkeit von 250 mm/s gemessen bei einer Temperatur von 200 °C
- LDPE: Low density polyethylene, MFI = 1,9 g/10 min bei 190 °C; 2,16 kg; Schmelzefestigkeit = 34 cN bei einer Dehngeschwindigkeit von 200 mm/s gemessen bei einer Temperatur von 200°C
- Treibmittel Masterbatch: Hydrocerol 592 (60 Gew.-% Polyethylen und 40 Gew.-% Citrate)
- Stabilisator : UV-Stabilisator (HALS - sterisch gehindertes Phenol)
- Pigment: schwarzer Farbstoff aus 85 Gew.-% Polyethylen und 15 Gew.-% Ruß

Der Schmelzflussindex (MFI, melt flow index), wie hier verwendet, wird gemäß DIN EN ISO 1133 bei einer Temperatur von 230 °C bzw. 190 °C und einer Last von 2,16 kg bestimmt. Der Schmelzflussindex (MFI) wird auch als Schmelze-Massefließrate (MFR) bezeichnet.

**Tabelle 1**

| **Bestandteile** | **Einheit** | **1(E)** | **2(V)** | **3(E)** | **4(V)** | **5(E)** |
|---|---|---|---|---|---|---|
| TPV | Gew.-teile | 20 | 40 | 40 | 20 | 33,3 |
| HMS PP | Gew.-teile | 20 | 40 | 20 | 40 | 33,3 |
| LDPE | Gew.-teile | 60 | 20 | 40 | 40 | 33,3 |
| Pigment | Gew.-teile | 1 | 1 | 1 | 1 | 1 |
| Stabilisator | Gew.-teile | 2 | 2 | 2 | 2 | 2 |
| Treibmittel | Gew.-teile | 2 | 2 | 2 | 2 | 2 |

| **Schaumeigenschaften** | | | | | | |
|---|---|---|---|---|---|---|
| Dicke | mm | 1,07 | 1,09 | 1,04 | 0,93 | 0,9 |
| Dichte | kg/m³ | 621 | 561 | 647 | 590 | 643 |
| Zugfestigkeit längs bei 20 °C | N/mm² | 8,57 | 9,81 | 7,56 | 10,93 | 8,92 |
| Zugfestigkeit quer bei 20 °C | N/mm² | 7,83 | 8,77 | 6,7 | 8,1 | 7,44 |
| Bruchdehnung längs bei 20 °C | N/mm² | 121 | 102 | 126 | 36 | 87 |
| Bruchdehnung quer bei 20 °C | N/mm² | 23 | 55 | 57 | 19 | 32 |
| Zugfestigkeit längs bei 85 °C | N/mm² | 2,49 | 5,14 | 2,3 | 5,26 | 3,68 |
| Zugfestigkeit quer bei 85 °C | N/mm² | 2,27 | 4,16 | 2,19 | 3,72 | 2,86 |
| Bruchdehnung längs bei 85 °C | N/mm² | 300 | 823 | 229 | 926 | 539 |
| Bruchdehnung quer bei 85 °C | N/mm² | 109 | 481 | 219 | 228 | 234 |
| Zugfestigkeit längs bei -35 °C | N/mm² | 13,6 | 20,9 | 18 | 22,4 | 17,6 |
| Zugfestigkeit quer bei -35 °C | N/mm² | 13,07 | 20,3 | 14,2 | 16,6 | 16,3 |
| Bruchdehnung längs bei -35°C | N/mm² | 10,6 | 13 | 11,1 | 7,9 | 10,5 |
| Bruchdehnung quer bei -35°C | N/mm² | 9,5 | 8,1 | 6,1 | 4,9 | 8 |
| Kugelfallprüfung bei -35 °C | | n.i.O. | n.i.O. | i.O. | n.i.O. | n.i.O. |
| Verstreckung bis 300 % | | i.O. | i.O. | i.O. | i.O. | i.O. |

Aus der Tabelle wird ersichtlich, dass zwar alle Folien tiefziehbar sind, die Schaumzusammensetzungen 1(E), 3(E) und 5(E) aber reduzierte und deutlich angenäherte Bruchdehnungs- und Zugfestigkeitswerte in Längs- und Querrichtung insbesondere bei hohen und tiefen Temperaturen aufweisen. Diese angenäherten Werte bewirken, dass eine rechteckige Airbag-Klappe, die das Laminat sowohl in Längs- als auch in Querrichtung durchbrechen muss, sich gut öffnen kann. Die Werte liegen auch auf einem Niveau, die dies ermöglichen. Bei den Vergleichsmischungen hingegen sind die Werte in Längs- und Querrichtung sehr unterschiedlich, insbesondere bei 85 °C sind eklatante Unterschiede in den Richtungen vorhanden. Eine Airbag-Klappe kann sich nicht ordnungsgemäß öffnen.

Die Zusammensetzung 3(E) führt außerdem zu einer Folie, die sich durch eine gute Kälteflexibilität, belegt durch die Kugelfallprüfung bei -35 °C, auszeichnet.

## Patentansprüche

1. Folienlaminat (1), umfassend zumindest eine kompakte Dekorschicht (2) mit einer Lackschicht (3) auf der Oberseite und einer Schaumschicht (4) auf der Unterseite, wobei die Schaumschicht (4) eine Dichte von mehr als 500 kg/m³ aufweist und auf einer Polymerzusammensetzung basiert, die
a) 15 bis 60 Gewichtsteile zumindest eines thermoplastischen Vulkanisates (TPV)
b) 15 bis 35 Gewichtsteile zumindest eines High Melt Strength Polyolefins (HMS Polyolefins) und
c) 30 bis 60 Gewichtsteile zumindest eines Low Density Polyethylens (LDPE) enthält,
wobei sich die Anteile von a), b) und c) zu 100 addieren.

2. Folienlaminat (1) nach Anspruch 1, **dadurch gekennzeichnet, dass** die Schaumschicht (4) auf einer Polymerzusammensetzung basiert, die
a) 35 bis 45 Gewichtsteile zumindest eines thermoplastischen Vulkanisates (TPV)
b) 15 bis 25 Gewichtsteile zumindest eines High Melt Strength Polyolefin (HMS Polyolefins) und
c) 35 bis 45 Gewichtsteile zumindest eines Low Density Polyethylens (LDPE) enthält,
wobei sich die Anteile von a), b) und c) zu 100 addieren.

3. Folienlaminat (1) nach zumindest einem der vorhergehenden Ansprüche, **dadurch gekennzeichnet, dass** das High Melt Strength Polyolefin ein High Melt Strength Polypropylen ist.

4. Folienlaminat (1) nach zumindest einem der vorhergehenden Ansprüche, **dadurch gekennzeichnet, dass** das thermoplastische Vulkanisat eines auf der Basis von Polypropylen und Ethylen-Propylen-Dien-Elastomer (EPDM) ist.

5. Folienlaminat (1) nach zumindest einem der vorhergehenden Ansprüche, **dadurch gekennzeichnet, dass** die Schaumschicht (4) auf einer Polymerzusammensetzung basiert, die ein festes, chemisches Treibmittel enthält.

6. Folienlaminat (1) nach zumindest einem der vorhergehenden Ansprüche 1 bis 4, **dadurch gekennzeichnet, dass** die Schaumschicht (4) physikalisch geschäumt ist.

7. Folienlaminat (1) nach zumindest einem der vorhergehenden Ansprüche, **dadurch gekennzeichnet, dass** die Lackschicht (3) eine Dicke von weniger als 10µm, die kompakte Dekorschicht (2) eine Dicke von 0,2 bis 0,7 mm und die Schaumschicht (4) eine Dicke von 0,5 bis 2,0 mm aufweist.

8. Verwendung eines Folienlaminats (1) nach einem der Ansprüche 1 bis 7 für die Beschichtung von Bauteilen für die Innenverkleidung von Kraftfahrzeugen, insbesondere mindestens im Bereich der Airbag-Abdeckungen oder im Bereich der Aufreißnähte der Airbag-Abdeckungen.

9. Innenverkleidungsteil für Kraftfahrzeuge, vorzugsweise Armaturenbrett, welches mit einem Folienlaminat (1) nach einem der Ansprüche 1 bis 8 versehen ist.

10. Innenverkleidungsteil nach Anspruch 9, wobei das Folienlaminat (1) mindestens im Bereich der Airbag-Abdeckungen bzw. im Bereich der Aufreißnähte der Airbag-Abdeckungen angeordnet ist.

## Claims

1. Film laminate (1) comprising at least one compact decorative layer (2) with a lacquer layer (3) on the upper side and a foam layer (4) on the underside, where the density of the foam layer (4) is above 500 kg/m³ and the foam layer (4) is based on a polymer composition which comprises
a) 15 to 60 parts by weight of at least one thermoplastic vulcanizate (TPV)
b) 15 to 35 parts by weight of at least one high melt strength polyolefin (HMS polyolefin) and
c) 30 to 60 parts by weight of at least one low density polyethylene (LDPE),
where the proportions of a), b) and c) give a total of 100.

2. Film laminate (1) according to Claim 1, **characterized in that** the foam layer (4) is based on a polymer composition which comprises
a) 35 to 45 parts by weight of at least one thermoplastic vulcanizate (TPV)
b) 15 to 25 parts by weight of at least one high melt strength polyolefin (HMS polyolefin) and
c) 35 to 45 parts by weight of at least one low density polyethylene (LDPE),
where the proportions of a), b) and c) give a total of 100.

3. Film laminate (1) according to at least one of the preceding claims, **characterized in that** the high melt strength polyolefin is a high melt strength polypropylene.

4. Film laminate (1) according to at least one of the preceding claims, **characterized in that** the thermoplastic vulcanizate is based on polypropylene and on ethylene-propylene-diene elastomer (EPDM).

5. Film laminate (1) according to at least one of the preceding claims, **characterized in that** the foam layer (4) is based on a polymer composition which comprises a solid chemical blowing agent.

6. Film laminate (1) according to at least one of the preceding Claims 1 to 4, **characterized in that** the foam layer (4) has been physically foamed.

7. Film laminate (1) according to at least one of the preceding claims, **characterized in that** the thickness of the lacquer layer (3) is below 10 µm, the thickness of the compact decorative layer (2) is 0.2 to 0.7 mm and the thickness of the foam layer (4) is 0.5 to 2.0 mm.

8. Use of a film laminate (1) according to any of Claims 1 to 7 for the coating of components for the internal cladding of motor vehicles, in particular at least in the region of airbag covers or in the region of tear seams of airbag covers.

9. Internal cladding part for motor vehicles, preferably dashboard to which a film laminate (1) according to any of Claims 1 to 8 has been provided.

10. Internal cladding part according to Claim 9, wherein the film laminate (1) is arranged at least in the region of the airbag covers and/or in the region of the tear seams of the airbag covers.

## Revendications

1. Feuille stratifiée (1), comprenant au moins une couche décorative compacte (2) comprenant une couche de vernis (3) sur le côté supérieur et une couche de mousse (4) sur le côté inférieur, la couche de mousse (4) présentant une densité supérieure à 500 kg/m³ et étant à base d'une composition de polymère, qui contient :
a) 15 à 60 parties en poids d'au moins un vulcanisat thermoplastique (TPV),
b) 15 à 35 parties en poids d'au moins une polyoléfine à haute résistance à l'état fondu (polyoléfine HMS), et
c) 30 à 60 parties en poids d'au moins un polyéthylène basse densité (LDPE),
la somme des proportions de a), b) et c) étant de 100.

2. Feuille stratifiée (1) selon la revendication 1, **caractérisée en ce que** la couche de mousse (4) est à base d'une composition de polymère, qui contient :
a) 35 à 45 parties en poids d'au moins un vulcanisat thermoplastique (TPV),
b) 15 à 25 parties en poids d'au moins une polyoléfine à haute résistance à l'état fondu (polyoléfine HMS), et
c) 35 à 45 parties en poids d'au moins un polyéthylène basse densité (LDPE),
la somme des proportions de a), b) et c) étant de 100.

3. Feuille stratifiée (1) selon au moins l'une quelconque des revendications précédentes, **caractérisée en ce que** la polyoléfine à haute résistance à l'état fondu est un polypropylène à haute résistance à l'état fondu.

4. Feuille stratifiée (1) selon au moins l'une quelconque des revendications précédentes, **caractérisée en ce que** le vulcanisat thermoplastique est à base de polypropylène et d'un élastomère éthylène-propylène-diène (EPDM).

5. Feuille stratifiée (1) selon au moins l'une quelconque des revendications précédentes, **caractérisée en ce que** la couche de mousse (4) est à base d'une composition de polymère qui contient un agent gonflant chimique solide.

6. Feuille stratifiée (1) selon au moins l'une quelconque des revendications 1 à 4 précédentes, **caractérisée en ce que** la couche de mousse (4) est moussée physiquement.

7. Feuille stratifiée (1) selon au moins l'une quelconque des revendications précédentes, **caractérisée en ce que** la couche de vernis (3) présente une épaisseur inférieure à 10 µm, la couche décorative compacte (2) présente une épaisseur de 0,2 à 0,7 mm, et la couche de mousse (4) présente une épaisseur de 0,5 à 2,0 mm.

8. Utilisation d'une feuille stratifiée (1) selon l'une quelconque des revendications 1 à 7 pour le revêtement de composants pour l'habillage intérieur de véhicules automobiles, notamment au moins dans la zone des revêtements d'airbags ou dans la zone des coutures déchirables des revêtements d'airbags.

9. Partie d'habillage intérieur pour véhicules automobiles, de préférence tableau de bord, qui est munie d'une feuille stratifiée (1) selon l'une quelconque des revendications 1 à 8.

10. Partie d'habillage intérieur selon la revendication 9, dans laquelle la feuille stratifiée (1) est agencée au moins dans la zone des revêtements d'airbags ou dans la zone des coutures déchirables des revêtements d'airbags.
